(19) Europäisches Patentamt

European Patent Office

Office européen des brevets

(11) **EP 1 714 998 A1**

(12) **EUROPÄISCHE PATENTANMELDUNG**

(43) Veröffentlichungstag:
25.10.2006  Patentblatt 2006/43

(51) Int Cl.:
*C08K 5/00* (2006.01)    *C08G 63/85* (2006.01)

(21) Anmeldenummer: 06007671.8

(22) Anmeldetag: **12.04.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **21.04.2005   DE 102005018617**

(71) Anmelder: **Mitsubishi Polyester Film GmbH**
**65203 Wiesbaden (DE)**

(72) Erfinder:
• **Kern, Ulrich, Dr.**
**55218 Ingelheim (DE)**
• **Murschall, Ursula, Dr.**
**55283 Nierstein (DE)**
• **Kuhmann, Bodo**
**65594 Runkel (DE)**

(74) Vertreter: **Schweitzer, Klaus et al**
**Zounek Plate Schweitzer**
**Patentanwaltskanzlei**
**Rheingaustrasse 196**
**65203 Wiesbaden (DE)**

(54) **Biaxial orientierte Folie auf Basis von titankatalysierten Polyestern**

(57)    Die Erfindung betrifft eine Polyesterfolie auf Basis von titankatalysierten Polyestern, bevorzugt PET oder PEN, welche zur Unterdrückung der durch den Katalysator hervorgerufenen Gelbfärbung im Polyester lösliche Farbstoffe, insbesondere Anthrachinone, enthält. Die Folie ist bevorzugt antimonfrei.

EP 1 714 998 A1

**Beschreibung**

Die Erfindung betrifft eine ein- oder mehrschichtige, biaxial orientierte Folie auf Basis von titankatalysierten Polyestern, die mindestens einen in Polyester löslichen Farbstoff enthält. Die Erfindung betrifft weiterhin ein Verfahren zur Herstellung der Folie und ihre Verwendung.

Die in der industriellen Praxis verwendeten Katalysatoren zur Herstellung von Polyestern sind Antimon-, Titan- und Germaniumverbindungen. Germanium enthaltende Katalysatoren haben aus dieser Gruppe die höchste katalytische Aktivität gefolgt von Titankatalysatoren. Antimonkatalysatoren weisen die geringste relative Aktivität auf. Dennoch wird der bei weitem überwiegende Teil der auf dem Weltmarkt verwendeten Polyestern mit Hilfe von Antimonkatalysatoren hergestellt. Dies liegt daran, dass Germaniumkatalysatoren aufgrund ihres extrem hohen Preises in der Regel unwirtschaftlich sind und Titankatalysatoren zu einer unerwünschten Gelbfärbung der so hergestellten Folie führen.

Dennoch besteht ein großes Interesse daran, die Antimonkonzentration in Polyesterprodukten deutlich zu verringern, da u. a. auch neue EU-Richtlinien Grenzwerte für die Antimonmigration vorschreiben, die insbesondere in PET (Polyethylenterephthalat) geringer Kristallinität nur schwer einzuhalten sind.

Folien auf Basis von Polyestern, insbesondere von Polyethylenterephthalaten, sind bekannt. Beschrieben sind auch Polyesterfolien, die auf Basis von titankatalysierten Polyestern hergestellt wurden. So ist beispielsweise in der EP-A-1 375 572 eine stabilisierte Folie auf Basis von titankatalysierten Polyestern beschrieben. Die Folie weist bereits in der Einzellage eine erhöhte Gelbzahl auf. Wird die Farbe eines Lagenpaketes oder die Farbe der Stirnkante der Folienrolle gemessen, so erkennt man, dass die Farbe deutlich von der aus einem antimonkatalysierten Polyester hergestellten Folie abweicht und unansehnlich gelb ist.

Polyesterfolien werden allgemein aus einem Kunststoffgranulat hergestellt, das in einem Extruder aufgeschmolzen wird. Über eine Breitschlitzdüse wird die dabei erzeugte Kunststoffschmelze zu einer so genannten Vorfolie geformt. Die Vorfolie wird dann an einer Abzugs- und Kühlwalze angelegt, anschließend in Längs- und Querrichtung verstreckt und schließlich aufgerollt. Die Folien sollen dabei eine geringe Gelbzahl sowie eine geringe Verfärbung der Stirnkante der Folienrolle aufweisen, damit das Aussehen oder die weitere Verarbeitung nicht beeinträchtigt werden.

Es bestand daher die Aufgabe, eine Polyesterfolie bereitzustellen, welche die aus dem Stand der Technik bekannten Nachteile, wie z. B. hoher Antimongehalt und Gelbfärbung im Falle von titankatalysierten Polyestern, nicht aufweist. Insbesondere sollte die Stirnseite der Folienrollen eine geringe Gelbfärbung aufweisen und die Farbe sollte der von Folien auf Basis antimonkatalysierter Polyester nahe kommen. Darüber hinaus sollte die Prozessstabilität gesteigert werden, d. h. es sollten keine Folienabrisse oder ähnliche Störungen bei der Produktion auftreten. Die Filterstandzeiten sollten verlängert und das Folienregenerat auch in größeren Anteilen wieder einsetzbar sein. Weiterhin sollten aufgrund solcher verbesserter Eigenschaften der Durchsatz und die Produktionsgeschwindigkeit optimiert werden können.

Gelöst wird die Aufgabe durch eine Folie basierend auf einem auf Titanbasis katalysierten Polyester, der einen oder mehrere im Polyester löslichen Farbstoffe enthält. Diese Farbstoffe können dem Polyester bereits bei der Polykondensation zugesetzt werden oder direkt in den Extruder dosiert werden oder aber mittels Masterbatch-Technologie unmittelbar vor der Folienherstellung zugegeben werden.

Gegenstand der vorliegenden Erfindung ist demgemäß eine ein- oder mehrschichtige, biaxial orientierte Folie auf Basis eines titankatalysierten Polyesters, die mindestens einen im Polyester löslichen Farbstoff enthält und deren Farbe sich nicht wesentlich von der einer aus antimonkatalysiertem Polyester hergestellten Folie unterscheidet. Dies gilt sowohl für die Einzellage der Folie als auch für mehrere Lagen sowie für die Stirnseite der Folienrolle. Die erfindungsgemäße Folie ist bevorzugt antimonfrei.

Die Farbe der Folie wird in diesem Zusammenhang mit den Kennzahlen $L^*$, $a^*$, $b^*$ in Transmission für die Einzellagen und die Lagenpakete gemäß der Norm DIN1674 bzw. ASTM D2244 bzw. in Reflexion für die Stirnkanten gemäß der Norm DIN 5033 sowie dem Gelbwert YID in Transmission für die Einzellagen und die Lagenpakete gemäß der Norm ASTM 1925-70 beschrieben. Diese Werte sind dickenabhängig. Daher ist es zweckmäßig, Werte sowohl für eine Einzellage als auch für Lagenpakete bzw. die Stirnseiten der Folienrollen anzugeben, um aussagefähige Werte zu erhalten.

$L^*$ ist die Helligkeitsachse (0 = schwarz, 100 = weiß). $a^*$ und $b^*$ sind die Farbmaßzahlen. Sie stellen den Farbkreis dar. $a^*$: $-a^*$/$+a^*$ = Rot/Grün-Achse; $b^*$: $-b^*$/$+b^*$ = Gelb/Blau-Achse.

Unter Lagenpaket versteht man aufeinander liegende Einzellagen, bis eine Dicke von insgesamt 0,5 mm erreicht ist.

Die erfindungsgemäße Folie weist bei einem 0,5 mm dicken Lagenpaket einen $b^*$-Wert im Bereich von bevorzugt 0 bis 12, insbesondere 1 bis 10, besonders bevorzugt von 1 bis 8, auf. $a^*$ liegt im Bereich von bevorzugt -2 bis +2, insbesondere -1,5 bis +1,5, besonders bevorzugt von -1 bis +1. $L^*$ liegt im Bereich von bevorzugt 20 bis 90, insbesondere 30 bis 85, besonders bevorzugt von 35 bis 80. YID für oben genanntes Lagenpaket liegt im Bereich von bevorzugt 5 bis 20, insbesondere 6 bis 18, besonders bevorzugt von 7 bis 17.

Die erfindungsgemäße Folie weist auf der Stirnseite der Kundenrolle einen $b^*$-Wert im Bereich von bevorzugt 0 bis 20, insbesondere 1 bis 18, besonders bevorzugt von 2 bis 16, auf. a* liegt im Bereich von bevorzugt -7 bis +1, insbesondere -6,5 bis +0,5, besonders bevorzugt von -6 bis 0. L* liegt im Bereich von bevorzugt 30 bis 70, insbesondere 35 bis 65, besonders bevorzugt von 40 bis 60.

Der Anteil der im erfindungsgemäßen (titankatalysierten) Polyester löslichen Farbstoffe beträgt bevorzugt 1 bis 100 ppm, insbesondere 1 bis 30 ppm, besonders bevorzugt 1 bis 20 ppm. Unter ppm werden Gewichtsteile bezogen auf das Gesamtgewicht des die Farbstoffe enthaltenden Polyesters verstanden. Es können auch Mischungen verschiedener Farbstoffe eingesetzt werden.

Vorteilhaft für die erfindungsgemäße Folie ist, dass der oder die Farbstoffe neben ihrer Löslichkeit in Polyester eine hohe thermische Stabilität aufweisen und nicht aus der Folie migrieren oder während des Herstellprozesses aus der Folie ausdampfen und somit zu unerwünschten Ablagerungen in den Produktionsanlagen führen. Des Weiteren sollten die für die erfindungsgemäßen Polyesterfolien verwendeten Farbstoffe für die Verwendung in Lebensmittelkontakt und für medizinische Anwendungen zugelassen sein bzw. zur Zulassung geeignet sein.

Unter löslichen Farbstoffen versteht man Substanzen, die im Polymeren molekular gelöst sind (DIN 55949, EN12887).

Die farbliche Veränderung der orientierten Folie beruht auf der wellenlängenabhängigen Absorption und/oder Streuung des Lichtes. Farbstoffe können Licht nur absorbieren, nicht streuen, da die physikalische Voraussetzung für Streuung eine bestimmte Teilchengröße ist.

Bei der Einfärbung mit Farbstoff handelt es sich um einen Lösungsprozess. Als Ergebnis dieses Lösungsprozesses ist der Farbstoff molekular beispielsweise in dem Polyester gelöst. Derartige Einfärbungen werden als transparent oder durchscheinend oder transluzent oder opal bezeichnet.

Von den verschiedenen Klassen der löslichen Farbstoffe werden besonders die fett- und aromatenlöslichen Farbstoffe bevorzugt. Dabei handelt es sich beispielsweise um Azo-, Phthalocyanin-, Isochinolin, Methin- und Anthrachinonfarbstoffe oder Perinone. Sie eignen sich insbesondere zur Einfärbung von PET, da aufgrund der hohen Glasübergangstemperaturen von PET die Migration des Farbstoffes eingeschränkt ist. (Literatur J. Koerner: Lösliche Farbstoffe in der Kunststoffindustrie in "VDI-Gesellschaft Kunststofftechnik:": Einfärben von Kunststoffen, VDI-Verlag, Düsseldorf 1975).

Geeignet sind auch Mischungen von zwei oder mehreren dieser löslichen Farbstoffe.

Besonders geeignet sind Farbstoffe, die ein hohes Molekulargewicht besitzen, da diese Farbstoffe eine niedrigere Tendenz haben, aus der Polyestermatrix zu migrieren bzw. während des Herstellprozesses aus dem Polyester auszudampfen. Darüber hinaus sind solche Farbstoffe in der Regel thermisch stabiler und somit für die hohen Verarbeitungstemperaturen von Polyestern besser geeignet.

Geeignete lösliche Farbstoffe sind beispielsweise diejenigen, die von der Fa. Clariant (DE) unter dem Handelsnamen ®Polysynthren oder von der Fa. Lanxess (DE) unter dem Handelsnamen ®Macrolex angeboten werden.

Als besonders geeignet haben sich Polysynthren Red FBL (Anthrachinon-Derivat, Fa. Clariant), Polysynthren Red GFP (Perinon, Fa. Clariant), Polysynthren Blue RBL und RLS (beides Anthrachinon-Derivate, Fa. Clariant), Macrolex Rot 5B Gran (Anthrachinon-Derivat, Fa. Lanxess), Macrolex Rot E2G Gran und EG Gran (Perinone, Fa. Lanxess), Macrolex Blue 3R Gran (Anthrachinon-Derivat, Fa. Lanxess) und Macrolex Blue RR Gran (Anthrachinon-Derivat, Fa. Lanxess) erwiesen.

Der erfindungsgemäße (titankatalysierte) Polyester mit dem oder den gelösten Farbstoffen (im folgenden bezeichnet als modifizierter Polyester) hat bevorzugt einen SV-Wert im Bereich von 450 bis 1300, insbesondere 700 bis 1000.

Wird dieser Polyester z. B. nach dem Dimethylterepthalat(DMT)-Verfahren hergestellt, so werden die Farbstoffe zweckmäßig nach der Umesterung direkt vor der Polykondensation in Form einer Lösung oder Dispersion in Glykol zugegeben. Der spezifische Schmelzewiderstand des auf diese Weise erhaltenen modifizierten Polyesters liegt im Bereich von bevorzugt $1 \cdot 10^7$ bis $150 \cdot 10^7$ Ohm · cm und ist damit nicht signifikant verschieden von dem eines nichtmodifizierten Polyesters. Gegebenenfalls kann der spezifische Schmelzewiderstand durch Zugabe von ionischen Additiven auf den gewünschten Wert eingestellt werden. Beispiele für solche Additive sind Magnesiumstearat oder -acetat oder Kaliumacetat u. a.

Der modifizierte Polyester enthält bevorzugt Einheiten aus Ethylenglykol und Terephthalsäure und/oder Einheiten aus Isophthalsäure, Naphthalin-1,5-dicarbonsäure, Naphthalin-2,6-dicarbonsäure und/oder Biphenyldicarbonsäure (= Bibenzoesäure) und/oder Einheiten aus aliphatischen oder cycloaliphatischen Diolen mit 2 bis 8 Kohlenstoffatomen, insbesondere aus Propylenglykol, Methylpropylenglykol, Butylenglykol und/oder Cyclohexandimethanol. Es handelt sich demgemäß bevorzugt um modifiziertes Polyethylenterephthalat, Polytrimethlyenterephthalat, Polybutylenterephthalat, Poly(1,4-cyclohexandimethylenterephthalat), Polyethylen-naphthalin-2,6-dicarboxylat, Polyethylen-naphthalin-1,5-dicarboxylat, Polytrimethlyennaphthalate, Polyethylennaphthalat/Bibenzoat oder weitere Kombinationen aus den genannten Monomeren. Modifiziertes Polyethylenterephthalat (PET) und modifiziertes Polyethylennaphthalat (PEN) sowie Gemische davon sind bevorzugt. In einerweiteren bevorzugten Ausführungsform enthält der Polyester zusätzlich mindestens 5 Gew.-% Isophthalsäure.

Unter der Bezeichnung modifizierte Polyester sollen dabei Homopolymere, Compounds, Copolymere, Recyclate und andere Variationen verstanden werden.

Die erfindungsgemäßen Polyester können z. B. aus Dimethylterephthalat nach bekannten Verfahren, z. B. nach dem Umesterungsverfahren (DMT-Verfahren), hergestellt werden, wobei sich als Umesterungskatalysatoren Zink-, Magnesium-, Calcium-, Mangan-, Lithium- oder Germaniumsalze eignen. Sie können auch durch Direktveresterung hergestellt werden (PTA-Verfahren). Erfindungsgemäße Polyester sind im Handel erhältlich.

Verwendete Polykondensationskatalysatoren im Sinne der Erfindung sind dabei Titanverbindungen in einer Konzentration im Polyester von bevorzugt 1 - 300 ppm (bezogen auf Titan), vorzugsweise 2 - 100 ppm und besonders bevorzugt 5 - 50 ppm.

Die für die erfindungsgemäßen Folien verwendeten Polyester werden mit Titankatalysatoren bevorzugt durch Direktveresterung hergestellt.

Durch den bzw. die zugegebenen Farbstoffe wird die Gelbfärbung des Polymers bei der Polykondensationsreaktion kompensiert. Dies gilt sowohl für das DMT- als auch für das PTA-Verfahren und ist von besonderer Bedeutung bei der Herstellung von Polyestern, die z. B. mit Pigmenten oder Partikeln (insbesondere Siliciumdioxid) gefüllt sind. Die Pigmente oder Partikel werden dabei in der Regel als glykolische Dispersion vor der Polykondensation zugegeben.

Die Pigmente oder Partikel können neben dem bisher beschriebenen Verfahren auch über Extrusionsmasterbatche zudosiert werden. Bei der Herstellung solcher Extrusionsmasterbatche werden die Partikel oder Pigmente direkt dem Polyester zugegeben und gemeinsam compoundiert. Auch die Zudosierung von Farbstoffen ist über diese Variante möglich.

Bevorzugt bis zu 50 Mol-%, insbesondere bis zu 30 Mol-%, der Polymereinheiten in dem erfindungsgemäßen Polyester können ersetzt sein durch Einheiten aus Comonomeren. Dabei können die Dicarbonsäurekomponente, die Glykolkomponente oder beide teilweise ersetzt sein. Als weitere Säurekomponente können die Polyester beispielsweise aliphatische Dicarbonsäuren der Art $HOOC-(CH_2)_n-COOH$ mit n = 1 bis 15 oder aromatische Dicarbonsäuren wie beispielsweise 5-Na-sulfo-isophthalsäure oder auch polyfunktionelle Säuren wie Trimellithsäure enthalten.

Die erfindungsgemäße biaxial orientierte Folie hat allgemein eine Dicke von ca. 0,5 bis 500 $\mu$m, bevorzugt von 1 bis 350 $\mu$m, besonders bevorzugt 2 bis 300 $\mu$m.

Bei Verwendung der modifizierten Polyester gemäß der vorliegenden Erfindung treten bei der Folienproduktion überraschenderweise praktisch keine Düsenablagerungen auf, so dass das Profil und die Rollenaufmachung der damit hergestellten Folie sehr gut sind. Selbst nach zweitägiger Produktion werden keinerlei Ablagerungen oder Ausgasungen festgestellt. Das Profil der Folie kann daher über einen sehr langen Zeitraum exakt konstant gehalten werden, was zu einer sehr guten Rollenaufmachung führt. Überraschenderweise ist die Anzahl der Gele und Stippen im Vergleich zu einer Folie aus nicht modifiziertem Polyester auch bei Einsatz von Ti-katalysiertem Polyester deutlich niedriger, so dass die Oberflächenqualität extrem verbessert ist. Selbst bei höheren Produktionsgeschwindigkeiten kommt es praktisch nicht mehr zu Folienabrissen. Bei zweitägiger Produktion einer Dünnstfolie mit einer Dicke von 4,5 $\mu$m, die bei hoher Produktionsgeschwindigkeit (mehr als 280 m/min) hergestellt wurde, trat kein einziger Abriss auf.

Weiterhin ist überraschend, dass die Polymerfilter bei Einsatz der erfindungsgemäßen Polyester eine längere Standzeit haben. Je nach Folientyp sind die Standzeiten deutlich verlängert, teilweise verdoppelt. Die Wirtschaftlichkeit der Folienherstellung ist daher deutlich verbessert. Überraschend ist auch, dass sich das bei der Folienherstellung immanent anfallende Regenerat problemlos auch in einer großen Menge (bis zu ca. 60 Gew.-%) wieder einsetzen lässt, ohne die Eigenschaften der Folie negativ zu beeinflussen. Selbst die Farbkennzahlen der Folie haben sich trotz des Einsatzes von Titankatalysatoren und trotz Einsatz von großen Mengen an Regenerat nicht verschlechtert, was mehr als überraschend ist.

Die erfindungsgemäße Polyesterfolie kann auch einen mehrschichtigen Aufbau haben. Sie besteht dann allgemein aus mindestens einer Kern- oder Basisschicht und mindestens einer Deckschicht. Dreischichtige Folien mit einem A - B - A - oder A - B - C - Aufbau (B = Kernschicht, A und C = Deckschichten) sind bevorzugt. Die Kernschicht besteht dabei bevorzugt aus dem modifizierten Polyester, insbesondere aus einem Polyethylenterephthalat-Homopolymeren. Als modifizierte PET-Homopolymere werden dabei solche bezeichnet, die neben den Ethylenglykol-, den Terephthalsäure-Einheiten und dem oder den gelösten Farbstoffen keine Einheiten aus anderen Monomeren enthalten. Die Deckschichten können z. B. aus modifizierten oder unmodifizierten PET- oder PEN-Homopolymeren, aus modifizierten oder unmodifizierten Poly(ethylenterephthalat/ethylennaphthalat)-Copolymeren oder entsprechenden Compounds bestehen, die auch titankatalysiert sind und die auch Farbstoffe enthalten können. Die Deckschichten A und C können gleich oder verschieden sein.

Kern- oder Basisschicht und/oder Deckschichten können neben den Farbstoffen zusätzlich weitere übliche Additive enthalten wie Antiblockmittel, UV-Stabilisatoren, Flammschutzmittel, Gleitmittel oder auch Hydrolysestabilisatoren, wie sie beispielsweise in EP-A-1 375 572 beschrieben sind. Die Additive werden zweckmäßig dem Polymer bzw. der Polymermischung bereits vor dem Aufschmelzen zugesetzt.

Als Additive können auch Mischungen von zwei oder mehr verschiedenen Antiblockmitteln oder Mischungen von Antiblockmitteln gleicher Zusammensetzung, aber unterschiedlicher Partikelgröße gewählt werden. Die Partikel können den einzelnen Schichten in den üblichen Konzentrationen beispielsweise in Form einer glykolischen Suspension bereits während der Polykondensation oder später unmittelbar vor der Extrusion in Form eines oder mehrerer Masterbatche zugegeben werden. Als besonders geeignet haben sich Additivkonzentrationen im Bereich von 0,0001 bis 20,0 Gew.-%, bezogen auf das Gewicht der damit ausgerüsteten Schichten, erwiesen.

Die mehrschichtigen Folien können demgemäß einen symmetrischen oder unsymmetrischen Aufbau haben. Die Kern- und/oder Deckschichten können mit zusätzlichen Additiven ausgestattet sein oder aus verschiedenartigen Polyestern (z. B. mit verschiedenem Molekulargewicht oder verschiedener Viskosität) bestehen, und sie können mit anderen Polymeren ausgerüstet sein wie beispielsweise Polyamiden, Polyolefinen, Polyetherimiden, Polycarbonaten, Ethylen-Methacrylat-Copolymeren, Ethylen-Vinylacetat-Copolymeren, PMMA oder anderen. Die mehrschichtigen Folien lassen sich besonders einfach durch Coextrusion herstellen.

Bei der Folienherstellung kann zum einen ein so genannter Vollrohstoff eingesetzt werden, dem bereits alle Additive einschließlich Farbstoffe vor der Polykondensation zugesetzt wurden. Zum anderen können sämtliche oder einzelne Additive auch während der Folienproduktion, d. h. nach der Polykondensation, zugeführt werden, vorzugsweise mit Hilfe der Masterbatch-Technologie. Dabei werden verschiedene Rohstoffkomponenten, die jeweils unterschiedliche Additive enthalten, vor der Extrusion gemischt. Der modifizierte Polyester kann dabei den so genannten Klarrohstoff bilden oder zumindest einen wesentlichen Bestandteil des Klarrohstoffes, dem dann die Masterbatche mit den verschiedenen Additiven hinzugefügt werden. Der modifizierte Polyester kann auch allein oder zusätzlich über die Masterbatche eingeführt werden.

Die Rohstoffkomponenten wie auch die gegebenenfalls eingesetzten Masterbatche sollten bevorzugt vorkristallisiert bzw. vorgetrocknet sein. Die Vortrocknung beinhaltet bevorzugt ein graduelles Erhitzen unter reduziertem Druck (z. B. 20 bis 80 mbar, vorzugsweise 30 bis 60 mbar, insbesondere 40 bis 50 mbar) sowie Rühren und gegebenenfalls ein Nachtrocknen bei konstanter, erhöhter Temperatur (ebenfalls bevorzugt unter reduziertem Druck). Es ist zweckmäßig, die Rohstoffkomponenten zusammen mit den Polymeren der Basis- und/oder Deckschichten und gegebenenfalls weiteren Komponenten bei Raumtemperatur, bevorzugt chargenweise, bevorzugt in einen Vakuumtrockner zu füllen. Im Laufe der Trocken- bzw. Verweilzeit wird ein Temperaturspektrum von ca. 10 bis 160 °C, vorzugsweise 20 bis 150 °C, insbesondere 30 bis 130 °C, durchlaufen. Während der etwa 6-stündigen, vorzugsweise 5-stündigen, insbesondere 4-stündigen, Verweilzeit wird die Rohstoffmischung bevorzugt mit 10 bis 70 Upm, vorzugsweise 15 bis 65 Upm, insbesondere 20 bis 60 Upm, gerührt. Das so vorkristallisierte bzw. vorgetrocknete Rohstoffgemisch wird in einem nachgeschalteten, ebenfalls bevorzugt (teil-)evakuierten Behälter bei ca. 90 bis 180 °C, vorzugsweise 100 bis 170 °C, insbesondere 110 bis 160 °C, für 2 bis 8 Stunden, vorzugsweise 3 bis 7 Stunden, insbesondere 4 bis 6 Stunden, nachgetrocknet.

Bei dem erfindungsgemäß bevorzugten Extrusionsverfahren zur Herstellung der Folie wird das aufgeschmolzene Polyestermaterial bzw. Rohstoffgemisch durch eine Schlitzdüse extrudiert bzw. coextrudiert und als weitgehend amorphe Vorfolie auf einer Kühlwalze abgeschreckt. Diese Folie wird anschließend erneut erhitzt und in Längs- und Querrichtung bzw. in Quer- und Längsrichtung bzw. in Längs-, in Quer- und nochmals und Längsrichtung und/oder Querrichtung verstreckt (orientiert). Die Strecktemperaturen liegen im allgemeinen bei ca. 10 bis 60 °C über der Glasübergangstemperatur $T_g$ der Folie, das Streckverhältnis der Längsstreckung liegt üblicherweise bei 2 bis 6, insbesondere bei 3 bis 4,5, das der Querstreckung üblicherweise bei 2 bis 5,5, insbesondere bei 3 bis 4,5, und das der gegebenenfalls durchgeführten zweiten Längs- und Querstreckung bei ca. 1,1 bis 3. Die erste Längsstreckung kann auch gleichzeitig mit der Querstreckung (Simultanstreckung) durchgeführt werden. Es folgt danach die Thermofixierung der Folie bei Ofentemperaturen von ca. 150 bis 250 °C, insbesondere von 170 bis 240 °C. Anschließend wird die Folie abgekühlt und aufgewickelt.

Durch die Kombination ihrer Eigenschaften eignen sich die erfindungsgemäßen Folien für eine Vielzahl verschiedener Anwendungen, besonders im industriellen Bereich, im Elektronikbereich, für Thermotransfer, als Verpackungsmaterial, als Magnetband-, Präge-, Trenn- oder Deckelfolien, als Kondensatorfolie, als Folie für medizinische Anwendungen, als Isoliermaterial, zum Kaschieren und Laminieren, um nur einiges zu nennen. Mit besonderem Vorteil lassen sich die Folien überall dort einsetzen, wo es auf eine besonders gleichmäßige und hohe Qualität ankommt.

In den nachfolgenden Ausführungsbeispielen erfolgt die Messung der einzelnen Eigenschaften gemäß den folgenden Normen bzw. Verfahren. Diese Messmethoden gelten auch für die in der vorangehenden Beschreibung verwendeten Parameter.

**Mittlere Dicke**

Die mittlere Dicke $d_F$ wird bei bekannter Länge, Breite und Dichte einer Folie aus deren Gewicht bestimmt. Gemessen wird das Gewicht eines auf dem Zuschneidetisch vorbereiteten Folienstreifens, der aus der Mitte eines über die ganze Rollenbreite gehenden Musters genommen wird. Die Berechnung von $d_F$ erfolgt nach der Formel

$$d_F\left[\mu m\right] = \frac{m\left[g\right]}{l\left[mm\right] \cdot b\left[mm\right] \cdot d\left[g\,/\,cm^3\right]} \cdot 10^{-6}$$

wobei gilt:

m =   Masse des untersuchten Folienstückes
l =    Länge der Probe
b =   Breite der Probe
d =   Dichte des untersuchten Materials (für Polyester z. B.1,395 g/cm$^3$)

Die einzelnen Probestreifen werden nach dem Zuschneiden auf einer Analysenwaage der Fa. Mettler PM 200 (Höchstlast 200 g) verwogen. Ein daran angeschlossener Computer vom Typ HP Vectra ES/12 übernimmt nach der Eingabe von Maschine und Rollennummer alle Parameter aus dem OPUS-Programm und errechnet damit die mittlere Dicke.

**Farbwerte**

Die Farbkennzahlen L*, a*, b* werden mit dem Messgerät Color-Sphere der Fa. Byk-Gardner (US) in Transmission für die Einzellagen und die Lagenpakete gemäß der Norm DIN 1674 bzw. ASTM D2244 bzw. in Reflexion mit dem Messgerät Chroma-Meter CR-310 der Fa. Minolta (DE) für die Stirnkanten gemäß der Norm DIN 5033 gemessen.
Messbedingungen für Gerät Color-Sphere der Fa. Byk-Gardner: Die verwendete Geometrie ist d/8 mit Glanz, der Messbereich ist 400-700 nm, die spektrale Auflösung ist 20 nm, die verwendete Lichtart ist D65, der verwendete Beobachter ist 10°, der Durchmesser der Messblende liegt bei 30 mm.
Messbedingungen für Gerät Chroma-Meter CR-310 der Fa. Minolta: Die verwendete Geometrie ist d/0, die verwendete Lichtart ist C, der verwendete Beobachter ist 10°, der Durchmesser der Messblende liegt bei 50 mm.
Der Gelbwert YID wird in Transmission für die Einzellagen und die Lagenpakete gemäß der Norm ASTM 1925-70 mit dem Messgerät Color-Sphere der Fa. Byk-Gardner gemessen.
Messbedingungen für Gerät Color-Sphere der Fa. Byk-Gardner: Die verwendete Geometrie ist d/8 mit Glanz, der Messbereich ist 400-700 nm, die spektrale Auflösung ist 20 nm, die verwendete Lichtart ist D65, der verwendete Beobachter ist 10°, der Durchmesser der Messblende liegt bei 30 mm.

**Standardviskosität (SV) und intrinsische Viskosität (IV)**

Die Standardviskosität SV wurde - angelehnt an DIN 53726 - als 1%ige Lösung in Dichloressigsäure (DCE) bei 25 °C gemessen. SV (DCE) = ($\eta_{rel}$ -1) x 1000. Die intrinsische Viskosität (IV) berechnet sich wie folgt aus der Standardviskosität (SV)

$$IV = [\eta] = 6{,}907 \cdot 10^{-4} \cdot \ SV\,(DCE\,) + 0{,}063096\ [dl/g]$$

**Oberflächendefekte**

Oberflächendefekte (Gele und Stippen) werden visuell bestimmt.

**Abrisse**

Die Anzahl der Folienabrisse pro Zeiteinheit in der Produktion wird mit der bei konventionellem Polymer verglichen und die prozentuale Abweichung festgestellt.

**Düsenablagerungen**

Die Düsenablagerungen werden visuell bestimmt.

**Folienprofil ∆E**

Das Profil der Folie wird kapazitiv mit Hilfe des elektronischen Dickenmessgerätes ML210-12-1 der Fa. Eichhorn-Hausmann (DE) bestimmt. Dazu wird ein 70 mm breiter Streifen in Querrichtung über die gesamte Folienbreite ausgeschnitten und auf eine Aluminiumwalze aufgewickelt. Die Folie wird mit einer Abrolleinrichtung abgerollt und dabei zwischen 2 Kondensatorplatten durchgeführt. Die eingestellte Dielektrizitätskonstante beträgt 3,30.

Die durch die Dickenunterschiede der Folie hervorgerufenen elektrischen Spannungsunterschiede werden mit Hilfe geeigneter Software in ein Dickenprofil umgewandelt.

Der Wert ∆E gibt den Unterschied zwischen maximaler und minimaler Dicke über die gesamte Folienbreite an.

**Filterstandzeit im Extrusionsbereich**

Der Wechsel von (Polymer-) Filtern kann zum einen durch Erreichen der Druckgrenze erforderlich werden, zum andern durch die Bildung von Stippen oder Gelen. Nach einer bestimmten Anzahl von Tagen wird die Filterstandzeit mit der bei konventionellem Polymer verglichen und die prozentuale Abweichung festgestellt.

**Beispiele**

In den folgenden Beispielen wird die Erfindung näher erläutert, ohne sie in irgendeiner Weise zu beschränken. Prozente sind dabei Gewichtsprozente, soweit nicht anders angegeben oder aus dem Zusammenhang ersichtlich; ppm = Gewichtsteile.

**Beispiel 1**

Es wurde eine 50 $\mu$m dicke Monofolie mit folgender Rezeptur hergestellt:

- 54 % Polyethylenterephthalat (PET) (Fa. Invista, DE), das 15 ppm Titan aus dem Polykondensationskatalysator Kalium-Titanyloxalat sowie 4 ppm ®Polysynthren Blue RLS (Fa. Clariant) und 3 ppm ®Macrolex Rot 5B Gran (Fa. Lanxess) enthält, mit einem SV-Wert von 810 ("Klarrohstoff"),
- 6 % eines titankatalysierten Masterbatches, das neben PET 10000 ppm Kaolin (®Sachtosil, Fa. Sachtleben, DE) und 3000 ppm Siliciumdioxid (®Sylobloc, Fa. Grace, DE), 4 ppm Polysynthren Blue RLS (Fa. Clariant) und 3 ppm Macrolex Rot 5B Gran (Fa. Lanxess) enthält,
- 40 % arteigenes Regenerat.

Die Mischung wurde bei 160 °C auf eine Restfeuchte von 50 ppm getrocknet und einem Extruder zugeführt. Durch anschließende stufenweise Orientierung in Längs- und Querrichtung wurde eine einschichtige, 50 $\mu$m dicke Folie hergestellt. Die Folie wurde 7 Tage lang bei einer Geschwindigkeit von 110 m/min produziert.

**Beispiel 2**

Es wurde eine 12 $\mu$m dicke, coextrudierte Folie mit folgender Zusammensetzung hergestellt:

Deckschichten (je 1 $\mu$m dick):

92 %   Klarrohstoff analoger Rezeptur aus Beispiel 1, jedoch mit einem SV-Wert von 790

8 %   Masterbatch mit einem SV-Wert von 810, das neben titankatalysiertem PET 2,2 Gew.-% Siliciumdioxid (Sylobloc, Fa. Grace, DE und ®Aerosil, Fa. Degussa, DE) enthält.

Basisschicht (10 $\mu$m dick):

40 %   Klarrohstoff analoger Rezeptur aus Beispiel 1, jedoch mit einem SV-Wert von 790

60 %   Regenerat, das aus inhärent angefallenen Folienverschnitt besteht.

Die Produktionsgeschwindigkeit betrug 380 m/min, die Produktionsdauer 8 Tage.

**Beispiel 3**

Es wurde eine 250 $\mu$m dicke Monofile mit folgender Rezeptur hergestellt:

- 51 % Polyethylenterephthalat (PET) (Fa. Invista, DE), das 19 ppm Titan aus dem Polykondensationskatalysator Lithium-Titanyloxalat sowie 4 ppm ®Polysynthren Blue RBL (Fa. Clariant) und 3 ppm ®Polysynthren Red FBL (Fa. Clariant) enthält, mit einem SV-Wert von 980,
- 4 % eines titankatalysierten Masterbatches, das neben PET 1,0 Gew.-% Siliciumdioxid (Sylobloc, Fa. Grace, DE) enthält,
- 45 % arteigenes Regenerat.

Die Folie wurde 7 Tage lang bei einer Geschwindigkeit von 35 m/min produziert.

**Vergleichsbeispiel V1**

Beispiel 2 wurde wiederholt. Jedoch wurde den eingesetzten titan-katalysierten Rohstoffen keinerlei Farbstoffe zugesetzt.

**Vergleichsbeispiel V2**

Beispiel 2 wurde wiederholt. Jedoch wurde den eingesetzten titan-katalysierten Rohstoffen nur blauer Farbstoff zugesetzt, auf den Rotfarbstoff wurde verzichtet.

**Vergleichsbeispiel V3**

Beispiel 2 wurde wiederholt. Alle eingesetzten Rohstoffe waren jedoch antimonkatalysiert und enthielten keinerlei Farbstoffe.

**Vergleichsbeispiel V4**

Beispiel 3 aus der Anmeldung EP-A-1 375 572 wurde nachgestellt:

Es wurde eine 12 $\mu$m dicke Folie aus einem Polymer hergestellt, das neben Polyethylenterephthalat 500 ppm in die Polymerkette einkondensiertes ®Irganox 1010 (Ciba Specialities, Basel, Schweiz), 1.500 ppm Sylobloc 44H als Additiv und 30 ppm Titan aus Lithium-Titanyloxalat als Polykondensationskatalysator enthielt. Der Anteil an arteigenem Regenerat betrug 40 %. Die Produktionsgeschwindigkeit betrug 340 m/min, die Produktionsdauer 12 Tage.

Die nachfolgende Tabelle zeigt das Eigenschaftsprofil der gemäß den Beispielen und Vergleichsbeispielen hergestellten Folien.

Tabelle

| Eigenschaften | | Beispiele | | | | | | |
|---|---|---|---|---|---|---|---|---|
| | | **1** | **2** | **3** | **V1** | **V2** | **V3** | **V4** |
| mittlere Dicke | $\mu$m | 50 | 12 | 250 | 12 | 12 | 12 | 12 |
| L* | E)[1] | 94,5 | 95,4 | 90,3 | 95,6 | 95,5 | 95,2 | 95,6 |
| | L)[1] | 66,5 | 39,7 | 83,1 | 41,2 | 40,8 | 40,3 | 41,0 |
| | S)[1] | 56,4 | 46,0 | 52,5 | 48,0 | 47,2 | 47,1 | 47,9 |
| b* | E | 1,0 | 0,6 | 3,9 | 0,9 | 0,6 | 0,6 | 1,0 |
| | L | 5,1 | 4,5 | 6,9 | 14,5 | 4,0 | 5,1 | 16,2 |
| | S | 10,2 | 4,2 | 12,3 | 22,3 | 4,3 | 4,6 | 25,4 |
| a* | E | 0,0 | 0,0 | 0,0 | 0,1 | -0,2 | 0,0 | 0,0 |
| | L | 0,0 | -0,3 | -0,3 | 0,2 | -4,8 | 0,0 | 0,1 |
| | S | -3,2 | -3,6 | -1,1 | -2,3 | -7,8 | -3,8 | -2,2 |
| YID | E | 2,1 | 1,2 | 7, 8 | 1,8 | 1,3 | 1,1 | 2,5 |
| | L | 13,1 | 16,5 | 14,4 | 32,3 | 16,8 | 18,6 | 36,9 |
| Profil $\Delta$E | $\mu$m | 1,2 | 0,4 | 7,0 | 0,4 | 0,4 | 0,5 | 0,4 |
| Oberflächendefekte)[3] | | 15 | 13 | 10 | 13 | 12 | 26 | 9 |
| Abrisse)[2] | % | 20 | 30 | 20 | 30 | 25 | 0 | 50 |
| Filterstandzeit)[2] | % | 30 | 10 | 25 | 10 | 15 | 0 | 70 |

(fortgesetzt)

| Eigenschaften | Beispiele | | | | | | |
|---|---|---|---|---|---|---|---|
| | **1** | **2** | **3** | **V1** | **V2** | **V3** | **V4** |
| Düsenablagerungen)[4] | + | + | + | + | + | - | + |

)[1] E = Einzellage, L = Lagenpaket, S = Stirnseite der Rolle
)[2] Verbesserung in % gegenüber Standard
)[3] Anzahl der Defekte pro 5 m$^2$
)[4] "+" = keine beobachtet, "-" = deutlich sichtbar

**Patentansprüche**

1. Polyesterfolie enthaltend einen titankatalysierten Polyester und mindestens einen im Polyester löslichen Farbstoff, welcher geeignet ist, die Gelbfärbung des titankatalysierten Polyesters zu kompensieren.

2. Polyesterfolie nach Anspruch 1, **dadurch gekennzeichnet, dass** sich ihre Farbe nicht wesentlich von der einer aus antimonkatalysiertem Polyester hergestellten Folie unterscheidet.

3. Polyesterfolie nach Anspruch 1 oder 2, **dadurch gekennzeichnet, dass** sie antimonfrei ist.

4. Polyesterfolie nach einem oder mehreren der Ansprüche 1 bis 3, **dadurch gekennzeichnet, dass** sie in einem 0,5 mm dicken Lagenpaket in Transmission einen b*-Wert von 0 bis 12, einen a*-Wert von -2 bis +2 und/oder einen L*-Wert von 20 bis 90 aufweist.

5. Polyesterfolie nach einem oder mehreren der Ansprüche 1 bis 4, **dadurch gekennzeichnet, dass** sie auf der Stirnseite einer Folienrolle in Reflexion einen b*-Wert von 0 bis 20, einen a*-Wert von -7 bis +1 und/oder einen L*-Wert von 30 bis 70 aufweist.

6. Polyesterfolie nach einem oder mehreren der Ansprüche 1 bis 5, **dadurch gekennzeichnet, dass** sie einen Gelbwert YID in einem 0,5 mm dicken Lagenpaket in Transmission von 5 bis 20 aufweist.

7. Polyesterfolie nach einem oder mehreren der Ansprüche 1 bis 6, **dadurch gekennzeichnet, dass** der titankatalysierte Polyester die löslichen Farbstoffe zu 1 bis 100 ppm enthält.

8. Polyesterfolie nach einem oder mehreren der Ansprüche 1 bis 7, **dadurch gekennzeichnet, dass** der titankatalysierte Polyester 1 bis 300 ppm Titanverbindungen, bezogen auf Titan, enthält.

9. Polyesterfolie nach einem oder mehreren der Ansprüche 1 bis 8, **dadurch gekennzeichnet, dass** als lösliche Farbstoffe Azo-, Phthalocyanin-, Isochinolin-, Methin- und/oder Anthrachinonfarbstoffe oder Perinone verwendet werden.

10. Polyesterfolie nach einem oder mehreren der Ansprüche 1 bis 9, **dadurch gekennzeichnet, dass** der titankatalysierte Polyester mit den gelösten Farbstoffen eine Standardviskosität von 450 bis 1300 aufweist.

11. Polyesterfolie nach einem oder mehreren der Ansprüche 1 bis 10, **dadurch gekennzeichnet, dass** der titankatalysierte Polyester Einheiten aus Ethylenglykol und/oder Terephthalsäure, Isophthalsäure, Naphthalin-1,5-dicarbonsäure, Naphthalin-2,6-dicarbonsäure und/oder Biphenyldicarbonsäure aufweist.

12. Polyesterfolie nach einem oder mehreren der Ansprüche 1 bis 11, **dadurch gekennzeichnet, dass** als titankatalysierter Polyester titankatalysiertes Polyethylenterephthalat, Polyethylennaphthalat oder deren Gemische verwendet werden.

13. Polyesterfolie nach einem oder mehreren der Ansprüche 1 bis 12, **dadurch gekennzeichnet, dass** die Folie eine Schichtabfolge A-B-C aufweist, wobei B die Basisschicht ist und A und C Deckschichten sind, die gleich oder verschieden sein können.

**14.** Polyesterfolie nach einem oder mehreren der Ansprüche 1 bis 13, **dadurch gekennzeichnet, dass** die Folie als Polymer ausschließlich titankatalysierten Polyester enthält.

**15.** Verfahren zur Herstellung einer Polyesterfolie nach einem oder mehreren der Ansprüche 1 bis 14, umfassend die Schritte

  a) Herstellen der Folie durch Extrusion oder Koextrusion,
  b) biaxiales Strecken der Folie und
  c) Thermofixieren der gestreckten Folie.

**16.** Verwendung einer Polyesterfolie nach einem oder mehreren der Ansprüche 1 bis 14 im industriellen Bereich, im Elektronikbereich, für Thermotransfer, als Verpackungsmaterial, als Magnetband-, Präge-, Trenn- oder Deckelfolien, als Kondensatorfolie, als Folie für medizinische Anwendungen, als Isoliermaterial, zum Kaschieren und Laminieren.

**Europäisches**
**Patentamt**

**EUROPÄISCHER TEILRECHERCHENBERICHT**
der nach Regel 45 des Europäischen Patentübereinkommens für das weitere Verfahren als
europäischer Recherchenbericht gilt

**Nummer der Anmeldung**

EP 06 00 7671

## EINSCHLÄGIGE DOKUMENTE

| Kategorie | Kennzeichnung des Dokuments mit Angabe, soweit erforderlich der maßgeblichen Teile | Betrifft Anspruch | KLASSIFIKATION DER ANMELDUNG (IPC) |
|---|---|---|---|
| X | US 2002/128427 A1 (SCHAAF ECKEHART ET AL) 12. September 2002 (2002-09-12) * Absatz [0052] - Absatz [0053]; Ansprüche 22-24; Beispiele * * Absatz [0061] - Absatz [0063] * ----- | 1-16 | INV. C08K5/00 C08G63/85 |
| X | EP 1 491 572 A (TORAY INDUSTRIES, INC) 29. Dezember 2004 (2004-12-29) * Absatz [0092] - Absatz [0096]; Beispiele 22-25; Tabelle 11 * ----- | 1-16 | |
| X | EP 1 437 373 A (TEIJIN LIMITED) 14. Juli 2004 (2004-07-14) * Absatz [0084] - Absatz [0086]; Beispiele * ----- | 1-16 | |
| X | US 2003/232960 A1 (ADELMAN DOUGLAS J ET AL) 18. Dezember 2003 (2003-12-18) * Absatz [0026]; Beispiele * ----- | 1-16 | |
| X | EP 0 547 553 A (HOECHST CELANESE CORPORATION) 23. Juni 1993 (1993-06-23) * Seite 3, Zeile 49 - Seite 4, Zeile 4; Beispiele * ----- -/-- | 1-16 | RECHERCHIERTE SACHGEBIETE (IPC) C08K C08G |

## UNVOLLSTÄNDIGE RECHERCHE

Die Recherchenabteilung ist der Auffassung, daß ein oder mehrere Ansprüche, den Vorschriften des EPÜ in einem solchen Umfang nicht entspricht bzw. entsprechen, daß sinnvolle Ermittlungen über den Stand der Technik für diese Ansprüche nicht, bzw. nur teilweise, möglich sind.

Vollständig recherchierte Patentansprüche:

Unvollständig recherchierte Patentansprüche:

Nicht recherchierte Patentansprüche:

Grund für die Beschränkung der Recherche:

Siehe Ergänzungsblatt C

| Recherchenort | Abschlußdatum der Recherche | Prüfer |
|---|---|---|
| München | 20. Juni 2006 | Schmitz, V |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C09)

**Europäisches Patentamt**

**EUROPÄISCHER TEILRECHERCHENBERICHT**

## EINSCHLÄGIGE DOKUMENTE

| Kategorie | Kennzeichnung des Dokuments mit Angabe, soweit erforderlich der maßgeblichen Teile | Betrifft Anspruch |
|---|---|---|
| X | US 2004/254330 A1 (DUAN JIWEN F ET AL) 16. Dezember 2004 (2004-12-16) * Absatz [0048]; Ansprüche; Beispiele; Tabellen * * Absatz [0065] * * Absatz [0077] * ----- | 1-16 |
| X | US 2004/176564 A1 (YAMAMOTO TOMOYOSHI ET AL) 9. September 2004 (2004-09-09) * Absatz [0080]; Ansprüche; Beispiele * ----- | 1-16 |
| X | WO 2004/013203 A (MITSUBISHI CHEMICAL CORPORATION; FUJIMORI, YOSHIHIRO; YUKITA, NAOKI) 12. Februar 2004 (2004-02-12) * das ganze Dokument * ----- | 1-16 |
| P,X | EP 1 541 613 A (MITSUBISHI CHEMICAL CORPORATION) 15. Juni 2005 (2005-06-15) * Absatz [0052]; Ansprüche; Beispiele; Tabellen * ----- | 1-16 |

**KLASSIFIKATION DER ANMELDUNG (IPC)**

**RECHERCHIERTE SACHGEBIETE (IPC)**

EPO FORM 1503 03.82 (P04C12)

Europäisches
Patentamt

**UNVOLLSTÄNDIGE RECHERCHE
ERGÄNZUNGSBLATT C**

Nummer der Anmeldung

EP 06 00 7671

Unvollständig recherchierte Ansprüche:
1-14

Nicht recherchierte Ansprüche:
-

Grund für die Beschränkung der Recherche:

Der vorliegende Anspruch 1 bezieht sich auf eine Polyesterfolie enthaltend einen im Polyester löslichen Farbstoff, wobei der Farbstoff lediglich durch eine gewünschte Funktion definiert ist und daher das Erfordernis der Klarheit nach Artikel 84 EPÜ nicht erfüllt. Die Definition des beanspruchten Gegenstandes durch ein zu erreichendes Ergebnis erlaubt es nicht, den Schutzumfang des Anspruchs zu bestimmen. Die Tatsache, dass jede Substanz einem Screeningverfahren unterzogen werden könnte, kann diesen Einwand nicht ausräumen, da der Fachmann im Voraus keine Kenntnis hat ob die Substanz unter den beanspruchten Schutzbereich fallen würde, mit Ausnahme der in der Beschreibung offenbarten Substanzen, siehe Seite 5 Zeilen 12-21 und Beispiele. Ein unzumutbarer Aufwand wäre erforderlich, um willkürlich ausgewählte Substanzen dem Screeningverfahren zu unterziehen. Die Verletzung der einschlägigen Erfordernisse ist so schwerwiegend, dass eine sinnvolle Recherche des ganzen beanspruchten Gegenstandes nicht durchgeführt werden konnte (Regel 45 EPÜ und Richtlinien B-VIII, 3).

Zusätzlich bezieht sich der Anspruch 1 auf eine extrem großen Anzahl von möglichen Produkten (Polyesterfolien enthaltend einen titankatalysierten Polyester und einen im Polyester löslichen Farbstoff). Stützung und Offenbarung im Sinne von Artikel 84 und 83 EPÜ kann jedoch nur für einen sehr kleinen Teil der beanspruchten Produkte gefunden werden, siehe Seite 5 Zeile 12-21, da sicherlich nicht alle Farbstoffe der auf Seite 4 Zeile 26-28 offenbarten farbstoffklassen die gestellte Aufgabe erfüllen. Die Verletzung der einschlägigen Erfordernisse ist so schwerwiegend, dass eine sinnvolle Recherche des ganzen beanspruchten Gegenstandes nicht durchgeführt werden konnte (Regel 45 EPÜ und Richtlinien B-VIII, 3). Der Umfang der Recherche wurde deshalb eingeschränkt.

Die Recherche von Anspruch 1 wurde deshalb auf die deutlich offenbarten Farbstoffe auf Seite 5 Zeilen 12-21 und Beispielen beschränkt.

Die vorliegende Ansprüche 3-6 beziehen sich auf ein Produkt, charakterisiert (inter alia) durch Bezugnahme auf den folgenden unüblichen Parameter:

$a^*$-Wert, $L^*$-Wert, $b^*$-Wert und Gelbwert YID gemessen an verschiedenen Stellen und mit verschiedenen Verfahren.

**Europäisches**
**Patentamt**

**UNVOLLSTÄNDIGE RECHERCHE**
**ERGÄNZUNGSBLATT C**

Nummer der Anmeldung

EP 06 00 7671

Die Verwendung dieses unüblichen Parameters im vorliegenden Zusammenhang führt zu einem Mangel an Klarheit. Der Anspruch definiert die Produkte, welche unter seinen Schutzumfang fallen, nicht klar, da der Parameter mit den in der Anmeldung genannten Angaben oder durch objektive Verfahren, welche im Stand der Technik üblich sind, nicht klar und zuverlässig bestimmt werden kann. Dabei sind explizit nicht der a*-, b* und L*-Wert an sich gemeint, sondern die Messpunkte und/oder Verfahren. Dadurch ist ein Vergleich des beanspruchten Gegenstandes mit dem Stand der Technik nicht möglich. Aus diesem Grund erfüllt der Anspruch die Erfordernisse der Klarheit nach Artikel 84 EPÜ nicht.

Die Recherche von Anspruch 4-6 wurde deshalb auf die in der Beschreibung klar definierten Beispiele beschränkt.

**ANHANG ZUM EUROPÄISCHEN RECHERCHENBERICHT
ÜBER DIE EUROPÄISCHE PATENTANMELDUNG NR.**

EP 06 00 7671

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-06-2006

| Im Recherchenbericht angeführtes Patentdokument | Datum der Veröffentlichung | Mitglied(er) der Patentfamilie | Datum der Veröffentlichung |
|---|---|---|---|
| US 2002128427 A1 | 12-09-2002 | CN 1344754 A | 17-04-2002 |
| | | DE 10045719 A1 | 04-04-2002 |
| | | EP 1188783 A2 | 20-03-2002 |
| | | ES 2217068 T3 | 01-11-2004 |
| EP 1491572 A | 29-12-2004 | CN 1576292 A | 09-02-2005 |
| | | JP 2005015630 A | 20-01-2005 |
| | | US 2004266978 A1 | 30-12-2004 |
| EP 1437373 A | 14-07-2004 | CA 2459580 A1 | 03-04-2003 |
| | | CN 1556825 A | 22-12-2004 |
| | | WO 03027166 A1 | 03-04-2003 |
| | | MX PA04001857 A | 07-03-2005 |
| | | US 2004254331 A1 | 16-12-2004 |
| US 2003232960 A1 | 18-12-2003 | AU 2003253642 A1 | 31-12-2003 |
| | | JP 2006504812 T | 09-02-2006 |
| | | MX PA04012508 A | 17-02-2005 |
| | | WO 03106383 A2 | 24-12-2003 |
| EP 0547553 A | 23-06-1993 | JP 5262862 A | 12-10-1993 |
| | | US 5340909 A | 23-08-1994 |
| US 2004254330 A1 | 16-12-2004 | KEINE | |
| US 2004176564 A1 | 09-09-2004 | KEINE | |
| WO 2004013203 A | 12-02-2004 | AU 2003254811 A1 | 23-02-2004 |
| | | CN 1675284 A | 28-09-2005 |
| | | EP 1541613 A1 | 15-06-2005 |
| EP 1541613 A | 15-06-2005 | AU 2003254811 A1 | 23-02-2004 |
| | | CN 1675284 A | 28-09-2005 |
| | | WO 2004013203 A1 | 12-02-2004 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

*   EP 1375572 A

### In der Beschreibung aufgeführte Nicht-Patentliteratur

*   VDI-Gesellschaft Kunststofftechnik. **J. KOERNER.** Lösliche Farbstoffe in der Kunststoffindustrie. VDI-Verlag, 1975